# FASCICULE DE BREVET EUROPEEN

(11) **EP 4 298 331 B1**
(45) Date de publication et mention de la délivrance du brevet: **12.11.2025**
(21) Numéro de dépôt: 22710688.7
(22) Date de dépôt: 23.02.2022
(51) Int. Cl.: F02C 7/18, F01D 5/08, F01D 25/12

(54) **TURBINE**
TURBINE
TURBINE

(30) Priorité: 24.02.2021 FR 2101803
(43) Date de publication de la demande: 03.01.2024
(73) Titulaire: Safran Aircraft Engines, 75015 Paris (FR); Safran Helicopter Engines, 64510 Bordes (FR)
(72) Inventeur: PELLATON, Bertrand, Guillaume, Robin, 77550 MOISSY-CRAMAYEL (FR); ZAIA, Thibaud Louis, 77550 MOISSY-CRAMAYEL (FR)
(74) Mandataire: Ernest Gutmann - Yves Plasseraud S.A.S.
(86) Numéro de dépôt international: PCT/FR2022/050331
(87) Numéro de publication internationale: WO 2022/180340

(56) Documents cités:
- FR-A1- 3 095 231
- US-A1- 2015 037 140

## Description

### Domaine technique

La présente divulgation concerne une turbine pour turbomachine. Plus particulièrement, la présente divulgation concerne le refroidissement d'une turbine dans une turbomachine d'aéronef.

### Technique antérieure

Il est courant dans une turbomachine de prélever de l'air sur un compresseur disposé en amont, par exemple un compresseur haute pression, pour refroidir des pièces dans des étages présentant un environnement plus chaud. L'air de refroidissement prélevé sur le compresseur haute pression est par exemple acheminé vers la turbine basse pression, ou vers la turbine haute pression de la turbomachine. L'air acheminé permet alors la purge de l'air chaud et la ventilation de certaines pièces (ex : disques, aubes mobiles) de ces turbines. Un tel refroidissement permet ainsi de limiter les risques de surchauffe des pièces mobiles des turbines, pouvant aboutir à une dégradation de celles-ci et dans le pire des cas, à une rupture de ces pièces.

A titre d'exemple, il est possible de réaliser un dispositif comprenant plusieurs canaux de prélèvement d'air sur le compresseur haute pression, ces canaux assurant la circulation de l'air prélevé vers la turbine basse pression ou vers la turbine haute pression afin de refroidir celles-ci. Ces canaux peuvent être creusés dans un carter fixe de la turbomachine, notamment un carter inter-turbine disposé entre la turbine haute pression et la turbine basse pression, et permettant de relier mécaniquement le carter de la turbine haute pression et le carter de la turbine basse pression. L'air de refroidissement s'écoulant dans ces canaux passe alors dans ce carter fixe, avant d'être injecté dans une cavité disposée radialement à l'intérieur de la turbine haute ou basse pression, par l'intermédiaire d'injecteurs disposés sur une paroi de ce carter fixe. Le document FR3084907A1 décrit un exemple d'un tel dispositif de refroidissement. Les documents FR3095231A1 et US2015/037140A1 divulguent des dispositifs de l'art antérieur également.

Cependant, bien que le refroidissement provoqué par l'air injecté dans la cavité privilégie la protection thermique des disques, et améliore ainsi la durée de vie de ces derniers du fait d'une réduction du gradient thermique dans la jante de chaque disque, l'introduction d'air de refroidissement diminue fortement le niveau absolu de température du disque ainsi que son niveau de dilatation thermique et peut conduire à une augmentation du jeu radial en sommet de pale et ainsi réduire la performance de la turbomachine.

Il existe donc un besoin double de conservation ou d'amélioration des performances de fonctionnement de la turbomachine acceptables, et de refroidissement en son sein.

### Résumé

Il est ainsi proposé une turbine pour turbomachine d'axe longitudinal selon la revendication 1 comprenant :
une alternance de rangées annulaires d'aubes mobiles et d'aubes fixes et
une cavité annulaire radialement interne formée radialement à l'intérieur desdites aubes mobiles et fixes,
un circuit d'alimentation en air de refroidissement de la cavité annulaire interne,
l'extrémité aval du circuit d'alimentation comprenant une rangée annulaire interne d'orifices et une rangée annulaire externe d'orifices débouchant dans la cavité annulaire radialement interne, la turbine comprenant en outre des moyens de pilotage du débit d'air d'alimentation desdits orifices desdites rangées annulaires interne et externe d'orifices.

Les rangées annulaires interne et externe d'orifices permettent à l'air refroidi de déboucher dans deux zones différentes de la cavité annulaire radialement interne, à savoir dans une zone radialement interne ou dans une zone radialement externe de la cavité, en fonction des conditions de fonctionnement de la turbine. L'air refroidit, selon la zone dans laquelle celui-ci débouche dans la cavité annulaire radialement interne, remplit ainsi un rôle de protection thermique des disques et un rôle d'optimisation des performances de la turbomachine. En particulier, les moyens de pilotage du débit d'air remplissent une fonction de pilotage actif du jeu radial en sommet de pale, par la régulation de la température présente dans la zone radialement externe de la cavité. Les moyens de pilotage permettent ainsi d'obtenir un compromis acceptable entre une exigence de refroidissement et une exigence de performance de la turbomachine.

Les moyens de pilotage injectent ainsi un air de refroidissement impactant directement ou indirectement les disques. L'air impactant directement les disques sera plus froid que l'air impactant indirectement les disques, du fait de l'échauffement que ces derniers subissent au contact des pièces de la cavité au travers des boucles de recirculation. Les moyens de pilotage permettent donc de réguler la température de l'air de refroidissement en fonction de l'objectif de fonctionnement de la turbine recherché.

Également, les moyens de pilotage comprennent un organe d'ouverture/fermeture de l'alimentation en air desdits orifices, l'organe étant commandé par lesdits moyens de pilotage. Il existe donc un contrôle actif de l'organe d'ouverture/fermeture.

La vanne est une vanne à trois voies.

Également, la vanne à trois voies peut être de type tout-ou-rien pour ouvrir séparément les orifices de la rangée annulaire interne d'orifices et les orifices de la rangée annulaire externe d'orifices.

Ainsi, en fonction des phases de fonctionnement de la turbomachine, la vanne peut ouvrir l'une ou l'autre de ses voies de sortie de sorte à privilégier les performances de la turbomachine ou son refroidissement. En phase de fonctionnement, la vanne peut donc par exemple fermer successivement une première voie de sortie puis une deuxième voie de sortie de sorte à obtenir un équilibre entre le besoin de refroidissement et la recherche de performance de la turbomachine. En outre, selon la voie de sortie ouverte, la formation de boucles de recirculation de l'air au sein de la cavité annulaire radialement interne est évitée.

Alternativement à la vanne à trois voies, l'organe d'ouverture/fermeture est un ensemble comprenant une première vanne et une seconde vanne, chacune des première et seconde vannes étant pilotée activement et indépendamment l'une de l'autre par les moyens de pilotage, pour réguler un débit d'air traversant respectivement les orifices de la rangée annulaire interne d'orifices et les orifices de la rangée annulaire externe d'orifices. Dans ce cas, en plus de l'ouverture différenciée de chaque rangée d'injecteurs prévue par la solution présentée par la vanne à trois voies, il est possible de réguler la quantité de débit passant au travers de l'une ou l'autre des rangées annulaires interne et externe pour adapter le niveau de refroidissement et/ou d'échauffement souhaité.

Dans un mode de réalisation, la turbine comprend une turbine haute pression en amont et une turbine basse pression en aval, la turbine haute pression et la turbine basse pression étant séparées longitudinalement par un carter inter-turbine comportant une pluralité de bras radiaux s'étendant dans le flux annulaire d'air primaire de la turbine,
le circuit d'alimentation en air de refroidissement s'étendant à l'intérieur d'un bras radial, les moyens de pilotage du débit d'air étant agencés dans ledit bras radial.

Dans un autre mode de réalisation, le circuit d'alimentation en air de refroidissement s'étend au travers d'une aube fixe, les moyens de pilotage du débit d'air étant formés radialement à l'intérieur de ladite aube fixe.

La présente divulgation concerne aussi une turbomachine telle qu'un turboréacteur ou un turbopropulseur, comprenant une turbine telle que décrite ci-dessus.

La présente divulgation concerne en outre un ensemble pour turbomachine comprenant une turbine telle que décrite ci-dessus, dans lequel le circuit d'alimentation est relié à son extrémité amont à des moyens de prélèvement d'air dans un compresseur, par exemple haute pression.

### Brève description des dessins

D'autres caractéristiques, détails et avantages apparaîtront à la lecture de la description détaillée ci-après, et à l'analyse des dessins annexés, sur lesquels :
**Fig. 1**

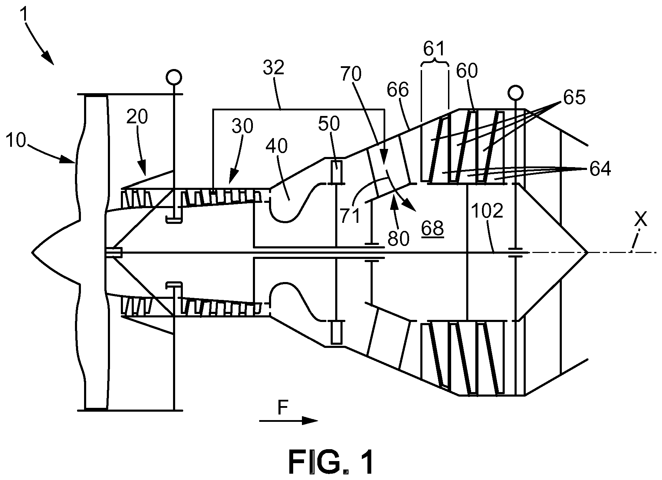

   [Fig. 1] La figure 1, déjà décrite précédemment, est une vue schématique en coupe d'une turbine selon la technique connue ;
**Fig. 2**

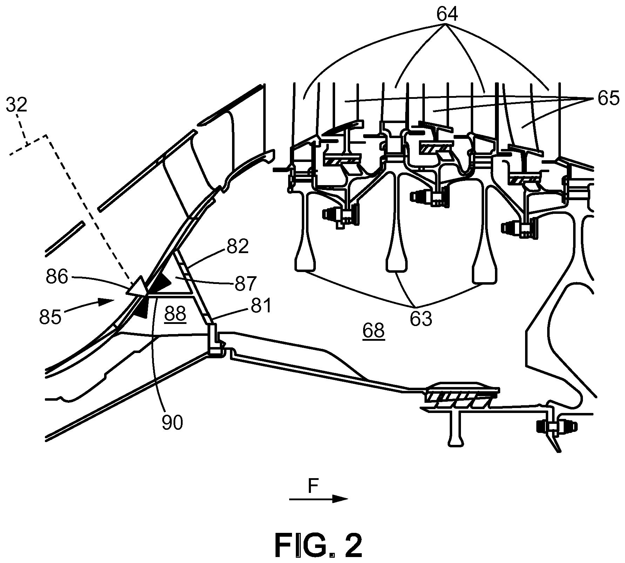

   [Fig. 2] La figure 2 est une vue schématique en coupe des moyens de pilotage du débit d'air selon un premier exemple de réalisation.
**Fig. 3**

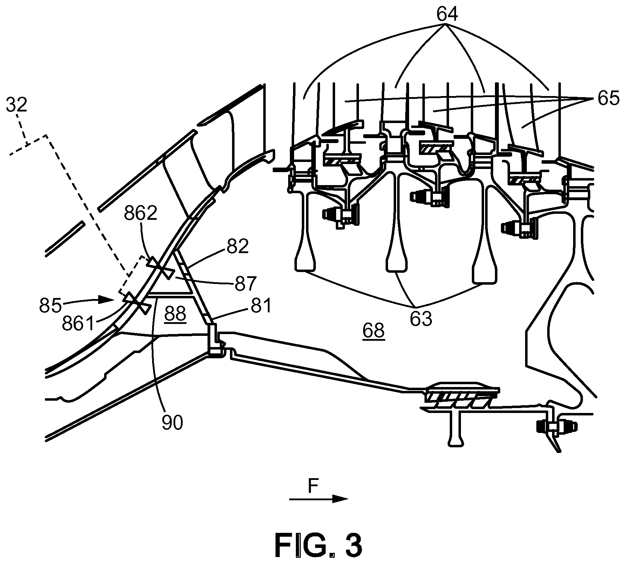

   [Fig. 3] La figure 3 est une vue schématique en coupe des moyens de pilotage du débit d'air selon un deuxième exemple de réalisation.

### Description des modes de réalisation

Les termes « amont » et « aval » sont par la suite définis par rapport au sens d'écoulement des gaz au travers une turbomachine, indiqué par la flèche F sur les figures 1 et 2.

La figure 1 illustre une turbomachine 1 à double flux comprenant de manière connue d'amont en aval successivement au moins une soufflante 10, une partie moteur comprenant successivement au moins un étage de compresseur basse pression 20, de compresseur haute pression 30, une chambre de combustion 40, au moins un étage de turbine haute pression 50 et de turbine basse pression 60.

Des rotors, tournant autour de l'axe principal X de la turbomachine 1 et pouvant être couplés entre eux par différents systèmes de transmission et d'engrenages, correspondent à ces différents éléments.

En outre, un carter inter-turbines 70 est disposé entre la turbine haute pression 50 et la turbine basse pression 60, et fixé mécaniquement au carter de la turbine haute pression 50 et au carter de la turbine basse pression 60. Le carter inter-turbines 70 fait notamment support du roulement guidant les turbines en rotation. Pour diminuer les pertes aérodynamiques, les bras de ce carter qui traverse le flux annulaire d'air primaire permettent de redresser le flux d'air, de la même façon qu'un étage de distributeur.

De manière connue, une fraction d'air est prélevée sur le compresseur haute pression 30 et est acheminé par l'intermédiaire d'un ou plusieurs circuit(s) d'alimentation 32 en air de refroidissement en vue de refroidir des zones plus chaudes de turbomachine 1, notamment la turbine haute pression 50 et la turbine basse pression 60. En particulier, l'air de refroidissement est acheminé jusqu'à une cavité à l'intérieur du carter inter-turbines 70 creux.

La turbine basse pression 60 ici illustrée comprend une pluralité d'étages 61 de turbine. Chaque étage 61 comprend respectivement un ensemble de distributeurs fixes 65 et un disque 63 mobile (non visible sur la figure 1) sur lequel est monté un ensemble d'aubes 64, disposées en aval des distributeurs 65, et, entraînées en rotation par le disque 63 mobile.

Dans l'exemple illustré sur la figure 1, le carter inter-turbines 70 est fixé au carter 66 de la turbine basse pression 60. Le carter inter-turbines 70 est creux pour laisser passer de l'air de refroidissement, sortant par l'intermédiaire d'un dispositif d'injection associé au carter inter-turbines 70, comprenant une pluralité d'injecteurs 80. Les disques 63 mobiles sont solidaires en rotation d'un arbre basse pression 102 s'étendant selon l'axe X, tandis que chaque distributeur 65 est relié au carter 66.

Conformément au présent exposé, la turbomachine 1 comprend un dispositif de refroidissement permettant d'acheminer, via le circuit d'alimentation 32, la fraction d'air prélevée sur le compresseur haute pression 30 vers la turbine basse pression 60. Dans l'exemple décrit ci-dessous, la fraction d'air de refroidissement prélevée est distribuée au niveau d'un étage amont de la turbine basse pression 60. La turbine basse pression 60 est ainsi refroidie. Cependant, l'invention n'est pas limitée à ce mode de réalisation, la fraction d'air prélevée pouvant être également distribuée à d'autres étages des turbines.

Dans l'exemple illustré sur la Figure 1, la fraction d'air prélevée dans le compresseur haute pression 30 s'écoule dans le circuit d'alimentation 32, puis dans le carter inter-turbines 70 creux. Plus précisément, le carter inter-turbines 70 comprend une pluralité de bras radiaux s'étendant dans le flux annulaire d'air primaire, le circuit d'alimentation 32 en air de refroidissement s'étendant à l'intérieur d'un des bras radiaux. La direction de circulation de la fraction d'air au travers du carter inter-turbines 70 est illustrée par les flèches 71. La fraction d'air est ensuite injectée via les injecteurs 80 dans une cavité annulaire radialement interne 68 au flux annulaire d'air primaire de la turbine, ou cavité sous veine 68. L'air distribué permet notamment de refroidir les disques 63 des turbines. L'air de refroidissement injecté par des orifices 80, ou injecteurs, permet par ailleurs la purge de l'air chaud présent dans la turbine basse pression 60, assurant ainsi le refroidissement de celle-ci. Plus précisément, l'air de refroidissement prélevé dans le compresseur haute pression 30 et acheminé jusque dans la cavité sous veine 68, constitue une barrière de pression, ou purge. Cette barrière de pression empêche l'air chaud provenant de la chambre de combustion et s'écoulant dans le flux annulaire d'air primaire de la turbine, c'est-à-dire dans la veine primaire de circulation d'air de la turbomachine 1, de pénétrer dans la cavité sous veine 68. Les risques de surchauffe des rotors des turbines sont ainsi limités. En particulier, en empêchant l'air de la veine primaire de rentrer dans la cavité sous veine 68, cette cavité est moins chaude que la veine, et les rotors de turbine peuvent donc résister à des efforts centrifuge plus élevé et être dimensionnés sur des contraintes limites moins élevées.

La figure 2 est un agrandissement d'une zone d'une turbomachine semblable à celle de la figure 1, illustrant la partie amont de la turbine basse pression 60.

Le circuit d'alimentation 32 en air de refroidissement illustré à la figure 2 comprend, en amont de la cavité annulaire radialement interne 68, une cavité annulaire amont radialement interne 88 et une cavité annulaire amont radialement externe 87. La cavité annulaire amont radialement interne 88 et la cavité annulaire amont radialement externe 87 sont séparées radialement par une paroi inter-cavité 90. La paroi inter-cavité 90 empêche la circulation de l'air entre la cavité annulaire amont radialement interne 88 et la cavité annulaire amont radialement externe 87.

Le circuit d'alimentation 32 comprend en outre une rangée annulaire interne d'orifices 81 et une rangée annulaire externe d'orifices 82. Les orifices 81, 82 débouchent dans la cavité annulaire radialement interne 68. En particulier, la rangée annulaire interne d'orifice 81 est agencée entre en amont, la cavité annulaire amont radialement interne 88 et en aval, la cavité annulaire radialement interne 68. De même, la rangée annulaire externe d'orifice 82 est agencée entre en amont, la cavité annulaire amont radialement externe 87 et en aval, la cavité annulaire radialement interne 68.

La cavité annulaire amont radialement interne 88 et la cavité annulaire amont radialement externe 87 sont ainsi en communication fluidique avec la cavité annulaire radialement interne 68, au travers des orifices 81, 82.

Comme visible à la figure 2, la turbomachine comprend des moyens de pilotage 85 du débit d'air d'alimentation des orifices 81, 82. Dans cet exemple, les moyens de pilotage 85 du débit d'air sont agencés dans un des bras radiaux du carter inter-turbines 70.

Alternativement, selon un autre exemple, non illustré, la turbomachine est dépourvue de carter inter-turbines. Dans cette configuration, le circuit d'alimentation 32 en air de refroidissement s'étend au travers d'une aube fixe, et les moyens de pilotage 85 du débit d'air sont formés radialement à l'intérieur de l'aube fixe 65.

Les moyens de pilotage 85 permettent de guider l'air de refroidissement dans la cavité annulaire radialement interne 68. Plus précisément, les moyens de pilotage 85 guident l'air de refroidissement dans une zone radialement interne ou radialement externe de la cavité annulaire radialement interne 68, selon les performances recherchées de fonctionnement de la turbomachine.

A cet effet, les moyens de pilotage 85 peuvent comprendre un organe d'ouverture/fermeture 86 des injecteurs, ou orifices 81, 82. L'organe d'ouverture/fermeture 86 peut consister en une ou plusieurs vannes venant réguler le débit d'air au travers des orifices. L'organe 86 est piloté activement par le moyen de pilotage 85. Par pilotage actif, il faut comprendre que l'organe 86 est commandé par le moyen de pilotage 85, envoyant un ordre d'ouverture/fermeture à l'organe 86.

Tel qu'illustré sur la figure 2, les moyens de pilotage 85 comprennent une vanne. La vanne 85 illustrée est agencée en amont de la cavité annulaire amont radialement interne 88 et de la cavité annulaire amont radialement externe 87. La vanne 85 est par exemple une vanne à trois voies. En particulier, la vanne 85 à trois voies permet le passage de l'air de refroidissement depuis le compresseur haute pression 30 vers les cavités amont radialement interne 88 et externe 87. La vanne 85 est de type « tout-ou-rien », c'est à dire que la vanne 85 permet le passage de l'air uniquement au travers des orifices de la rangée annulaire interne d'orifices 81 ou uniquement des orifices de la rangée annulaire externe d'orifices 82.

Par exemple, si le refroidissement des disques 63 est privilégié à la performance de la turbomachine, la vanne 85 ferme sa voie débouchant dans la cavité annulaire amont radialement interne 88 et ouvre sa voie débouchant dans la cavité amont radialement externe 87. L'air de refroidissement traverse les orifices de la rangée annulaire externe d'orifices 82 pour déboucher dans une zone radialement externe de la cavité annulaire radialement interne 68. L'air de refroidissement ainsi injecté dans la cavité annulaire radialement interne 68, impacte directement les disques 63 du fait de sa proximité immédiate avec ces derniers. En effet la proximité des orifices de la rangée annulaire externe d'orifices 82 et des disques 63 empêche la création de boucles de recirculation d'air, ces boucles étant propices au réchauffement de l'air. Les disques 63 sont ainsi efficacement refroidis.

Dans un exemple contraire, si la performance de la turbomachine est privilégiée au refroidissement des disques 63, la vanne 85 ferme sa voie débouchant dans la cavité annulaire amont radialement externe 87 et ouvre sa voie débouchant dans la cavité annulaire amont radialement interne 88. L'air de refroidissement traverse les orifices de la rangée annulaire interne d'orifices 81 pour déboucher en position radialement interne dans la cavité annulaire radialement interne 68. L'air de refroidissement ainsi injecté dans la cavité annulaire radialement interne 68, du fait de son éloignement des disques 63 et par la création de boucles de recirculation d'air a tendance à se réchauffer avant d'atteindre les disques 63.

L'air provenant des orifices de la rangée annulaire interne d'orifices 81 est donc plus chaud que l'air provenant des orifices de la rangée annulaire externe d'orifices 82. Par conséquent, en fonction des phases de fonctionnement de la turbomachine, la vanne 85 peut ouvrir l'une au l'autre de ses voies de sortie de sorte à privilégier les performances de la turbomachine ou son refroidissement.

L'exemple de la figure 2 illustre que les moyens de pilotage 85 comprennent une vanne. Les moyens de pilotage 85 ne sont toutefois pas limité à une seule vanne. Par exemple, un ou plusieurs clapets ou pistons peuvent convenir en tant que moyens de pilotage 85.

Selon un autre exemple, illustré à la figure 3 et alternativement à la vanne à trois voies, l'organe d'ouverture/fermeture 86 peut être un ensemble comprenant une première et une seconde vannes 861, 862, chacune contrôlant les orifices respectivement de l'une des rangées annulaires interne et externe. Les vannes 861 et 862 peuvent être en outre pilotées activement et indépendamment l'une de l'autre. Dans ce cas, en plus de l'ouverture différenciée de chaque rangée d'orifices, la quantité de débit passant au travers de l'une ou l'autre des rangées d'orifices est régulable. Dans cet exemple, les moyens de pilotage 85 adaptent ainsi les niveaux à la fois de refroidissement et d'échauffement souhaités. Les vannes permettent ainsi le passage de l'air alternativement ou simultanément, et le cas échéant avec des débits différents, au travers des orifices de la rangée annulaire interne d'orifices 81 et des orifices de la rangée annulaire externe d'orifices 82. L'air de refroidissement peut ainsi traverser à la fois les orifices de la rangée annulaire externe d'orifices 82 pour déboucher dans une zone radialement externe de la cavité annulaire radialement interne 68 et les orifices de la rangée annulaire interne d'orifices 81 pour déboucher dans une zone radialement interne de la cavité annulaire radialement interne 68, de sorte à adapter simultanément le refroidissement des disques 63 et les performances de la turbomachine. En d'autres termes, le refroidissement des zones radialement interne et externe de la cavité annulaire radialement interne 68 est régulé par un pilotage actif distinct de chacune des zones. Le jeu radial en sommet de pale et la performance de la turbomachine sont donc contrôlés activement, indépendamment l'un de l'autre. Dans cette configuration, les vannes 861 et 862 peuvent être par exemple agencées en amont des cavités amont radialement interne 88 et externe 87, dans un des bras radiaux du carter inter-turbine 70.

## Revendications

1. Turbine (1) pour turbomachine d'axe longitudinal (X) comprenant :
une alternance de rangées annulaires d'aubes mobiles (64) et d'aubes fixes (65) et
une cavité annulaire radialement interne (68) formée radialement à l'intérieur desdites aubes mobiles et fixes (64, 65),
un circuit d'alimentation (32) en air de refroidissement de la cavité annulaire interne (68),
l'extrémité aval du circuit d'alimentation (32) comprenant une rangée annulaire interne d'orifices (81) et une rangée annulaire externe d'orifices (82) débouchant dans la cavité annulaire radialement interne (68), la turbine comprenant en outre des moyens de pilotage (85) du débit d'air d'alimentation desdits orifices desdites rangées annulaires interne et externe d'orifices (81, 82), les moyens de pilotage (85) du débit d'air comprenant un organe d'ouverture/fermeture (86) de l'alimentation en air desdits orifices (81, 82), commandé par lesdits moyens de pilotage (85), la turbine étant **caractérisée en ce que** :
- l'organe d'ouverture/fermeture (86) est une vanne à trois voies, ou
- l'organe d'ouverture/fermeture est un ensemble comprenant une première vanne (861) et une seconde vanne (862), chacune des première et seconde vannes (861, 862) étant pilotée activement et indépendamment l'une de l'autre par les moyens de pilotage (85), pour réguler un débit d'air traversant respectivement les orifices de la rangée annulaire interne d'orifices (81) et les orifices de la rangée annulaire externe d'orifices (82).

2. Turbine selon la revendication 1, dans laquelle la vanne (86) à trois voies est de type tout-ou-rien pour ouvrir séparément les orifices de la rangée annulaire interne d'orifices (81) et les orifices de la rangée annulaire externe d'orifices (82).

3. Turbine selon l'une quelconque des revendications précédentes, comprenant une turbine haute pression (50) en amont et une turbine basse pression (60) en aval, la turbine haute pression (50) et la turbine basse pression (60) étant séparées longitudinalement par un carter inter-turbine (70) comportant une pluralité de bras radiaux s'étendant dans le flux annulaire d'air primaire de la turbine,
le circuit d'alimentation (32) en air de refroidissement s'étendant à l'intérieur d'un bras radial, les moyens de pilotage (85) du débit d'air étant agencés dans ledit bras radial.

4. Turbine selon la revendication 1 ou 2, dans laquelle le circuit d'alimentation (32) en air de refroidissement s'étend au travers d'une aube fixe (65), les moyens de pilotage (85) du débit d'air étant formés radialement à l'intérieur de ladite aube fixe (65).

5. Ensemble pour turbomachine comprenant une turbine (1) selon l'une quelconque des revendications précédentes, dans lequel le circuit d'alimentation (32) est relié à son extrémité amont à des moyens de prélèvement d'air dans un compresseur, par exemple haute pression (30).

6. Turbomachine telle qu'un turboréacteur ou un turbopropulseur, comprenant une turbine (1) selon l'une quelconque des revendications 1 à 4 ou un ensemble selon la revendication 5.

## Patentansprüche

1. Turbine (1) für ein Turbotriebwerk mit Längsachse (X), umfassend:
eine Wechselfolge von ringförmigen Reihen von beweglichen Schaufeln (64) und feststehenden Schaufeln (65) und
einen radial inneren ringförmigen Hohlraum (68), der radial innerhalb der beweglichen und feststehenden Schaufeln (64, 65) ausgebildet ist,
einen Zuführstrang (32) zum Zuführen von Kühlluft zum inneren ringförmigen Hohlraum (68), wobei das stromabwärtige Ende des Zuführstrangs (32) eine innere ringförmige Reihe von Öffnungen (81) und eine äußere ringförmige Reihe von Öffnungen (82) umfasst, die in den radial inneren ringförmigen Hohlraum (68) münden, wobei die Turbine ferner Steuermittel (85) zum Steuern des Luftdurchsatzes der Öffnungen der inneren und der äußeren ringförmige Reihe von Öffnungen (81, 82) umfasst, wobei die Steuermittel (85) zum Steuern des Luftdurchsatzes ein über die Steuermittel (85) gesteuertes Öffnungs-/Schließorgan (86) für die Luftzufuhr zu den Öffnungen (81, 82) umfassen,
wobei die Turbine **dadurch gekennzeichnet ist, dass**
- das Öffnungs-/Schließorgan (86) ein Dreiwegeventil ist, oder
- das Öffnungs-/Schließorgan eine Anordnung ist, die ein erstes Ventil (861) und ein zweites Ventil (862) umfasst, wobei das erste und das zweite Ventil (861, 862) jeweils aktiv und unabhängig voneinander über die Steuermittel (85) gesteuert werden, um einen Luftdurchsatz zu regulieren, der jeweils durch die Öffnungen der inneren ringförmigen Reihe von Öffnungen (81) bzw. die Öffnungen der äußeren ringförmigen Reihe von Öffnungen (82) strömt.

2. Turbine nach Anspruch 1,
wobei das Dreiwegeventil (86) ein Auf-Zu-Ventil ist, um die Öffnungen der inneren ringförmigen Reihe von Öffnungen (81) und die Öffnungen der äußeren ringförmigen Reihe von Öffnungen (82) separat freizugeben.

3. Turbine nach einem der vorstehenden Ansprüche, umfassend eine stromaufwärts angeordnete Hochdruckturbine (50) und eine stromabwärts angeordnete Niederdruckturbine (60), wobei die Hochdruckturbine (50) und die Niederdruckturbine (60) in Längsrichtung durch ein Zwischenturbinengehäuse (70) getrennt sind, das eine Vielzahl von radialen Armen aufweist, die sich in den ringförmigen Primärluftstrom der Turbine erstrecken,
wobei sich der Zuführstrang (32) zum Zuführen von Kühlluft innerhalb eines radialen Arms erstreckt und die Steuermittel (85) zum Steuern des Luftdurchsatzes in dem radialen Arm angeordnet sind.

4. Turbine nach Anspruch 1 oder 2,
wobei sich der Zuführstrang (32) zum Zuführen von Kühlluft durch eine feststehende Schaufel (65) hindurch erstreckt, wobei die Steuermittel (85) zum Steuern des Luftdurchsatzes radial innerhalb der feststehenden Schaufel (65) ausgebildet sind.

5. Anordnung für ein Turbotriebwerk, umfassend eine Turbine (1) nach einem der vorstehenden Ansprüche,
wobei der Zuführstrang (32) an seinem stromaufwärtigen Ende mit Mitteln zur Entnahme von Luft aus einem Verdichter, beispielsweise einem Hochdruckverdichter (30), verbunden ist.

6. Turbotriebwerk, etwa Turbostrahltriebwerk oder Turboprop-Triebwerk, umfassend eine Turbine (1) nach einem der Ansprüche 1 bis 4 oder eine Anordnung nach Anspruch 5.

## Claims

1. A turbine (1) for a turbomachine of longitudinal axis (X) comprising:
an alternating arrangement of annular rows of movable blades (64) and fixed blades (65) and
a radially inner annular cavity (68) formed radially inside said movable and fixed blades (64, 65),
a supply circuit (32) for supplying cooling air to the inner annular cavity (68),
the downstream end of the supply circuit (32) comprising an inner annular row of orifices (81) and an outer annular row of orifices (82) opening into the radially inner annular cavity (68), the turbine further comprising means (85) for controlling the flow rate of supply air to said orifices of said inner and outer annular rows of orifices (81, 82), the air flow rate control means (85) comprise a member (86) for opening/closing the air supply to said orifices (81, 82), controlled by said control means (85), the turbine being **characterized in that** :
- the opening/closing member (86) is a three-way valve, or
- the opening/closing member is an assembly comprising a first valve (861) and a second valve (862), each of the first and second valves (861, 862) being actively controlled independently of each other by the control means (85), in order to regulate a flow rate of air passing through the orifices of the inner annular row of orifices (81) and the orifices of the outer annular row of orifices (82) respectively.

2. The turbine according to claim 1, wherein the three-way valve (86) is of the on-off type for separately opening the orifices of the inner annular row of orifices (81) and the orifices of the outer annular row of orifices (82).

3. The turbine according to any of the preceding claims, comprising an upstream high-pressure turbine (50) and a downstream low-pressure turbine (60), the high-pressure turbine (50) and the low-pressure turbine (60) being longitudinally separated by an inter-turbine casing (70) including a plurality of radial arms extending into the annular stream of primary air of the turbine,
the cooling air supply circuit (32) extending inside a radial arm, the air flow rate control means (85) being arranged in said radial arm.

4. The turbine according to any of claims 1 or 2, wherein the cooling air supply circuit (32) extends through a fixed blade (65), the air flow rate control means (85) being formed radially inside said fixed blade (65).

5. A turbomachine assembly comprising a turbine (1) according to any of the preceding claims, wherein the supply circuit (32) is connected at its upstream end to means for taking air from a compressor, for example a high-pressure compressor (30).

6. A turbomachine such as a turbojet or turboprop engine, comprising a turbine (1) according to any of claims 1 to 4 or an assembly according to claim 5.
